# EUROPÄISCHE PATENTSCHRIFT

(11) **EP 3 851 651 B1**
(45) Veröffentlichungstag und Bekanntmachung des Hinweises auf die Patenterteilung: **06.03.2024**
(21) Anmeldenummer: 20152492.3
(22) Anmeldetag: 17.01.2020
(51) Int. Cl.: F02C 1/00, F02C 6/00, A62C 27/00, F02C 7/045

(54) **DÜSENSTRAHLGETRIEBENER SPRÜHSTRAHLWERFER**
NOZZLE JET-DRIVEN SPRAY JET LAUNCHER
DISPOSITIF DE LANCEMENT DE JET DE PULVÉRISATION À ENTRAÎNEMENT À JET DE BUSE

(43) Veröffentlichungstag der Anmeldung: 21.07.2021
(73) Patentinhaber: Dicosy AG, 8112 Otelfingen (CH)
(72) Erfinder: HUBER, Thomas, 77955 Ettenheim (DE); SALVEL, Renato, 77955 Ettenheim (DE)
(74) Vertreter: Liebetanz, Michael

(56) Entgegenhaltungen:
- DE-A1- 1 935 990
- DE-T2- 60 224 924
- KR-A- 20040 019 441
- US-A- 3 077 731
- US-A- 4 421 455
- US-A1- 2013 112 497

## Beschreibung

### TECHNISCHES GEBIET

Die vorliegende Erfindung betrifft einen düsenstrahlgetriebenen Sprühstrahlwerfer.

### STAND DER TECHNIK

Ein düsenstrahlgetriebener Sprühstrahlwerfer umfasst ein Düsentriebwerk, an dem mindestens ein Wasserwerfer montiert ist, dessen Strahlrichtung im Wesentlichen derart in Richtung des Abgasstrahles des Düsentriebwerkes ausgerichtet, dass das aus dem Wasserwerfer abgegebene Wasser als Sprühstrahl im Abgasstrahles des Düsentriebwerkes mitgerissen wird.

Ein solcher düsenstrahlgetriebener Sprühstrahlwerfer erlaubt die Bekämpfung von Feuern aus grösserer Entfernung und kann dabei einen effektiven Wasserschleier erzeugen.

### DARSTELLUNG DER ERFINDUNG

Ein Nachteil eines düsenstrahlgetriebenen Sprühstrahlwerfers ist der durch das Düsentriebwerk erzeugte Geräuschpegel. Dieser macht den Einsatz eines solchen Sprühstrahlwerfers im Innern von Gebäuden wie zum Beispiel Lagerhallen schwierig.

Aus der KR 2004 0019441 A ist ein düsenstrahlgetriebener Sprühstrahlwerfer mit den Merkmalen des Oberbegriffs des Anspruchs 1 bekannt.

Die US 3,077,731 A zeigt einen Turboverdichter in Kombination mit einer Brennkraftmaschine eines landgebundenen Fahrzeugs und sieht das Vorsehen von Absorbermaterial auf Verdichterseite vor, um Geräuschemissionen zu vermindern.

Es ist daher ein Ziel der vorliegenden Erfindung einen düsenstrahlgetriebenen Sprühstrahlwerfer anzugeben, der einen nochmals verbesserten geringeren Geräuschpegel erzeugt.

Diese Aufgabe wird für einen düsenstrahlgetriebenen Sprühstrahlwerfer mit einem Strahltriebwerk, an dem mindestens ein Wasserwerfer montiert ist, dessen Strahlrichtung im Wesentlichen derart in Richtung des Abgasstrahles des Strahltriebwerkes ausgerichtet ist, dass das aus dem Wasserwerfer abgegebene Wasser als Sprühstrahl im Abgasstrahles des Strahltriebwerkes mitgerissen wird, und bei dem auf der Lufteinlassseite des Strahltriebwerkes ein Einlaufsegment über den Querschnitt des Lufteinlasses befestigt ist, und bei dem das Einlaufsegment im Bereich des Lufteinlasses eine im Wesentlichen Zylindermantelform aufweist, dadurch gelöst, dass ein in das Einlaufsegment eingeschobener Pilzeinlauf vorgesehen ist, mit dem ein Einlaufquerschnitt für das Strahltriebwerk gebildet wird, welcher von einer radialen Richtung bezüglich der Triebwerksachse in Richtung der Triebwerksachse umgelenkt ist, wobei zudem auf der ausserhalb des Einlaufquerschnitts liegenden Seite des Einlaufquerschnittes eine mit Absorbermaterial gefüllte erste Absorbermaterialaufnahme vorgesehen ist, die durch eine Absorbermaterialabdeckung vom Einlaufquerschnitt getrennt ist.

Dieser Pilzeinlauf kann dann zusätzlich eine mit Absorbermaterial gefüllte dritte Absorbermaterialaufnahme an der zur Triebwerksachse ausgerichteten Wand des Pilzeinlaufs aufweisen, die durch eine Absorbermaterialabdeckung vom Einlaufquerschnitt getrennt ist.

Diese dritte Absorbermaterialaufnahme kann von der radial orientierten Mündung des Einlaufquerschnitts bis zum quasi-hohlzylindrischen Mantel des Pilzeinlaufs angeordnet sein.

An der Mündung des Einlaufquerschnitts zwischen Einlaufsegment und Pilzeinlauf kann ein umlaufendes Einlaufschutzgitter vorgesehen sein, so dass keine Fremdkörper, die im Aufstellbereich des Werfers vorkommen, in den Luftstrahl eingesaugt werden.

Die erste Absorbermaterialaufnahme deckt vorteilhafterweise das Einlaufsegment im Wesentlichen in Umlaufrichtung vollständig ab, um eine maximale Geräuschdämmung zu erreichen.

Vorteilhafterweise wird im Bereich des Strahltriebwerks selber mindestens eine weitere mit Absorbermaterial gefüllte Absorbermaterialaufnahme an der Aussenwand eines Mantelstromkanals vorgesehen ist, die durch eine Absorbermaterialabdeckung vom Mantelstromkanal getrennt ist. Dabei kann es sich um eine zweite Absorbermaterialaufnahme an einer rein parallel zur Triebwerksachse gerichteten Aussenwand eines Mantelstromkanals handeln, aber auch um eine sich zur Triebwerksachse verjüngenden dann dritten Absorbermaterialaufnahme.

Jede Absorbermaterialabdeckung kann durch ein Loch- oder Schlitzblech gebildet sein, wobei dieses dann in die jeweilige Wand bündig eingelassen ist, um den vorbeiziehenden Luftstrom möglichst wenig zu stören.

Das Absorbermaterial kann vorteilhafterweise ausgewählt werden aus der Gruppe bestehend aus porösen Absorbern, mit Einsatz von Textilien, Mineralwolle und/oder Schaumstoff.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Seitenansicht eines selbstfahrenden düsenstrahlgetriebenen Sprühstrahlwerfers als Beispiel;
- Fig. 2: eine schematische Seitenansicht im Querschnitt des Luftansaugbereiches eines düsenstrahlgetriebenen Sprühstrahlwerfers gemäss einem Beispiel;
- Fig. 3: eine schematische Seitenansicht im Querschnitt eines düsenstrahlgetriebenen Sprühstrahlwerfers gemäss einem weiteren Beispiel;
- Fig. 4: eine schematische Seitenansicht im Querschnitt des Luftansaugbereiches eines düsenstrahlgetriebenen Sprühstrahlwerfers gemäss einem Ausführungsbeispiel der Erfindung ähnlich zur Fig. 2;
- Fig. 5: eine vergrösserte schematische Seitenansicht im Querschnitt einer Einlauftrompete des Luftansaugbereiches eines düsenstrahlgetriebenen Sprühstrahlwerfers gemäss einem weiteren Ausführungsbeispiel der Erfindung ähnlich zur Fig. 4, und
- Fig. 6: eine sehr schematische Querschnittsansicht durch einen mittleren Bereich eines Strahltriebwerks entlang der Linie VI - VI der Fig. 3, wobei es sich um ein modifiziertes Beispiel der Fig. 3 handelt.

### BESCHREIBUNG BEVORZUGTER AUSFÜHRUNGSFORMEN

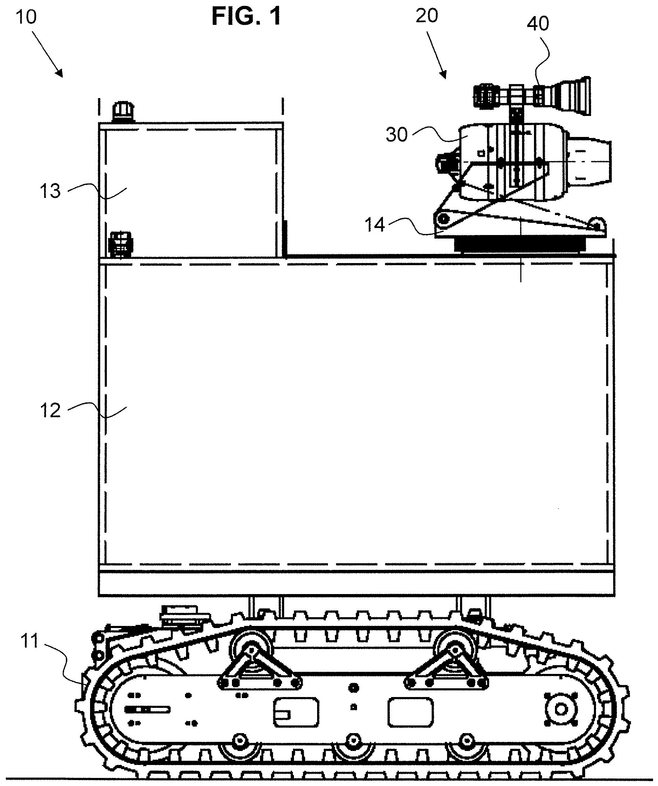

Die Fig. 1 zeigt eine schematische Seitenansicht eines selbstfahrenden düsenstrahlgetriebenen Sprühstrahlwerfereinsatzwagens 10 als Beispiel. Der Einsatzwagen 10 umfasst ein Kettenlaufwerk 11, welches in anderen Ausführungen auch als Radfahrzeug ausgestaltet sein kann. Auf diesem ist ein Chassis montiert, welches eine Lafette 14 trägt, auf der ein Strahltriebwerk 30 montiert ist, zu dem im wesentlichen colinear ein Wasserwerfer 40 montiert ist. Hier ist ein einzelner Wasserwerfer 40 oberhalb des Strahltriebwerks 30 gezeigt. Bei dem in der Fig. 1 dargestellten Strahltriebwerk 30 handelt es sich um ein Exemplar, wie es für Drohnen Verwendung findet. Grundsätzlich ist die Grösse des Strahltriebwerks 30 für den Einsatz der Erfindung nicht wesentlich.

Dabei wird das Düsentriebwerk mit Brennstoff, zum Beispiel Flugbenzin, von einem Treibstofftank 13 gespeist. Der Wasserwerfer 40 wird mit einem Wassertank 12 verbunden, oder er wird an einen anderen Wasserspender, wie einen Hydranten, angeschlossen.

Bei einem oberhalb des Strahltriebwerks 30 angeordnetem Wasserwerfer 40 kann selbst bei einem parallel zum Abgasstrahl des Strahltriebwerks 30 angeordneten Wasserwerfer 40 der von diesem abgegebene Wasserstrahl durch die Schwerkraft an den Rand des Abgasstrahls des Strahltriebwerks 30 absenken, so dass die Wassertropfen des Wasserstrahls durch den Abgasstrahl mitgerissen und weit mitgetragen werden. Es können auch zwei oder mehr Wasserwerfer 40 symmetrisch und nahe zur Mittellinie auf dem Umkreis an dem Strahltriebwerk 30 nebeneinander angeordnet sein.

Die Lafette 14 verfügt insbesondere über eine horizontale Drehachse für ein nach oben Ausrichten der Kombination Strahltriebwerk 30 plus an diesem angeordnete(m) Wasserwerfer 40 und optional über eine vertikale Drehachse zum Drehen des düsenstrahlgetriebenen Sprühstrahlwerfers um seine eigene Achse.

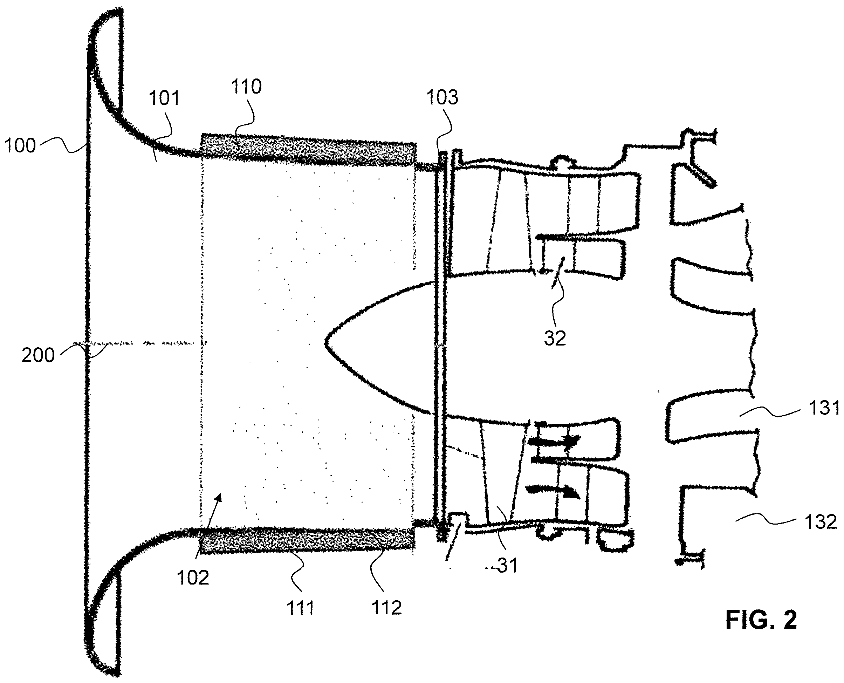

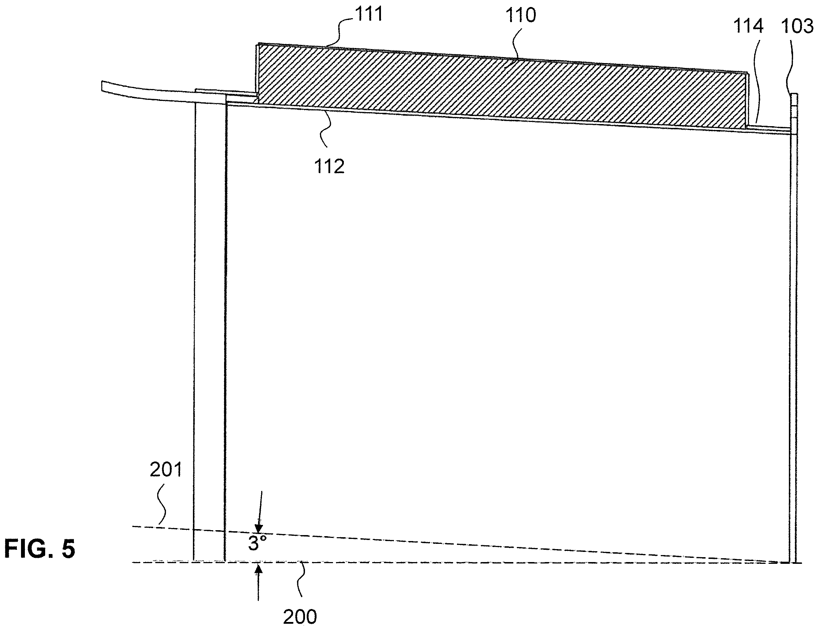

Die Schallschutzmassnahmen gemäss der Erfindung sind in Fig. 1 nicht mit Bezugszeichen versehen, die Elemente nach Fig. 5 sind beispielsweise abgedeckt, ein Einlaufsegment, wie nach Fig. 2 ist nicht dargestellt.

Fig. 2 zeigt nun eine schematische Seitenansicht im Querschnitt des Luftansaugbereiches 100 eines düsenstrahlgetriebenen Sprühstrahlwerfers 10 gemäss einem Beispiel. Dabei ist das nur der Luftansaugbereich des handelsüblichen Strahltriebwerk 30 dargestellt. Dieses hat in der Regel heute einen Stator 32 vor dem die Schaufelblätter 31 drehen. Dabei sind dann im weiteren Bereich Richtung Ausgangsbereich des Strahltriebwerks 30 ein Mantelstrom 132 und ein Kernstrom 131 in entsprechenden Kanälen vorgesehen. An der Luftansaugseite des Triebwerks ist ein vorzugsweise umlaufender Flansch vorgesehen.

Dieser Flansch liegt einem Befestigungsflansch 103 des Einlaufsegments 100 gegenüber. Das Einlaufsegment 100 ist ein um die Triebwerkshauptachse 200 symmetrisch ausgestalteter Trompetenkörper. In Lufteinlassrichtung beginnt das Einlaufsegment 100 mit einem Einlauftubus 101, welcher sich über eine erste Länge in Richtung der Triebwerkshauptachse 200 von einem Durchmesser, der grösser als der Durchmesser des Strahltriebwerks 30 im Querschnitt ist, zu einem Zwischendurchmesser verkleinert, welcher immer noch etwas grösser, zum Beispiel zwischen 1/10 und 1/25, als der Durchmesser des Strahltriebwerks 30 im Querschnitt ist. An diesen, eine in Längsrichtung gekrümmte Oberfläche aufweisenden Einlauftubus 101 schliesst sich ein Zylinderkonusabschnitt 102 an. Die Bezeichnung Zylinderkonusabschnitt 102 ist deshalb gewählt worden, weil sich hier in Längsrichtung ein leicht verjüngender Zylinderkonusmantelabschnitt anschliesst, der mit dem Befestigungsflansch 103 zur Befestigung des Einlauftubus 101 an dem vorderen Ende des Strahltriebwerks 30 endet.

Hierbei ist es nun wesentlich, dass ein wesentlicher Teil, vorzugsweise die gesamte Länge, des Zylinderkonusmantelabschnitts die Wand eine Absorbermaterialabdeckung 112 ist, die später im Zusammenhang mit der Fig. 5 noch näher beschrieben wird. Hinter der Absorbermaterialabdeckung 112, also ausserhalb des zum Strahltriebwerk 30 führenden Luftstromkanals befindet sich eine Absorbermaterialaufnahme 111, die mit einem Absorbermaterial 110 gefüllt ist.

Das Absorbermaterial 110 ist vorzugsweise ein akustisches Absorbermaterial, beispielsweise ein poröses Material. Die Absorbermaterialaufnahme 111 ist vorzugsweise am gesamten Umkreis, also 360 Grad um die Triebwerkshauptachse 200 herum, vorgesehen.

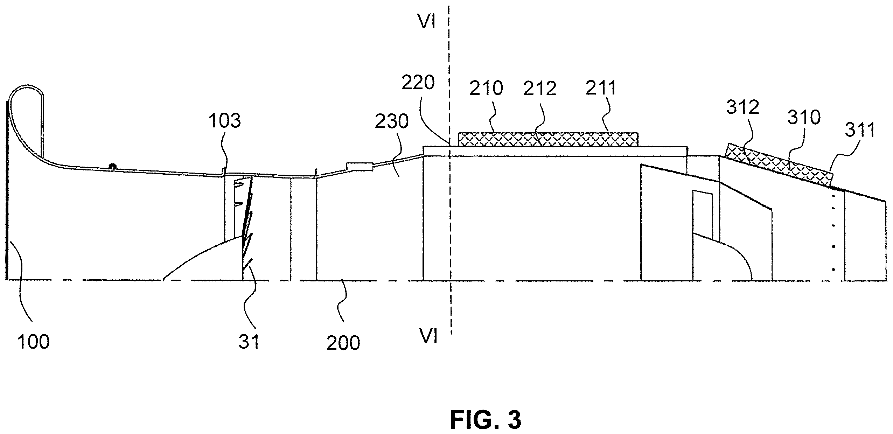

Fig. 3 zeigt eine schematische Seitenansicht im Querschnitt eines düsenstrahlgetriebenen Sprühstrahlwerfers 10 gemäss einem weiteren Beispiel. Gleiche Bezugszeichen bezeichnen in allen Figuren immer gleiche oder funktionalgleiche Merkmale. Die Querschnittsansicht beschränkt sich auf einen Teil hier oberhalb der Triebwerkshauptachse 200. Wesentlich ist hier der Nebenstrom- oder Mantelkanal 230 hinter dem Lufteinlass. Das Einlaufsegment 100 aus den Fig. 1 und 2 ist hier nicht dargestellt. Das Triebwerk beginnt mit dem Befestigungsflansch 103 links im Bild.

Im Bereich des Mantelkanals 230, der im Wesentlichen ohne Richtungs- oder Durchmesseränderung verläuft, ist eine weitere in Umkreisrichtung des äusseren Triebwerkskanal umlaufende Absorberaufnahme 211 vorgesehen. Diese Absorberaufnahme 211 ist zum Nebenstromkanal 230 hin, also gegenüber innen, mit einer Absorbermaterialabdeckung 212 versehen, so dass der Zwischenraum mit dem Absorbermaterial 210 gefüllt ist. Vorteilhafterweise ist diese Absorberaufnahme 211 über die gesamte Länge und den gesamten Umfang des zylinderförmigen Aussenwandbereichs des Mantelstromkanals 230 angeordnet.

Zusätzlich kann eine weitere Absorberaufnahme 311 im sich verjüngenden Auslassbereich des Mantelstromkanals 230 vorgesehen sein, ebenfalls mit einer Absorbermaterialabdeckung 312 gegenüber dem Mantelstromkanal 230 und mit Absorbermaterial 310 gefüllt.

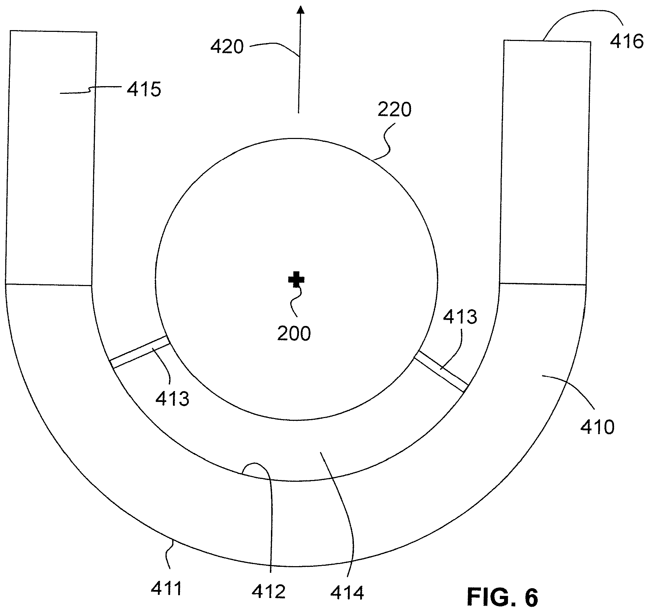

Die Abdeckung mit Absorbermaterial 210 kann je nach Bauform des Düsentriebwerkes zu einer nicht optimalen Wärmeableitung führen, so dass eine bevorzugte Ausführung der Anordnung des entsprechenden Absorbermaterials im Bereich des Mantelkanals 230 in der Fig. 6 dargestellt ist, die eine schematische Schnittzeichnung entlang der Linie VI - VI eines Ausführungsbeispiels einer angepassten Fig. 3 ist. Dabei ist mit dem Bezugszeichen 220 in beiden Zeichnungen die Aussenwand des Strahltriebwerks 30 bezeichnet. Gleiches kann für die Anordnung des Absorbermaterials 310 gelten.

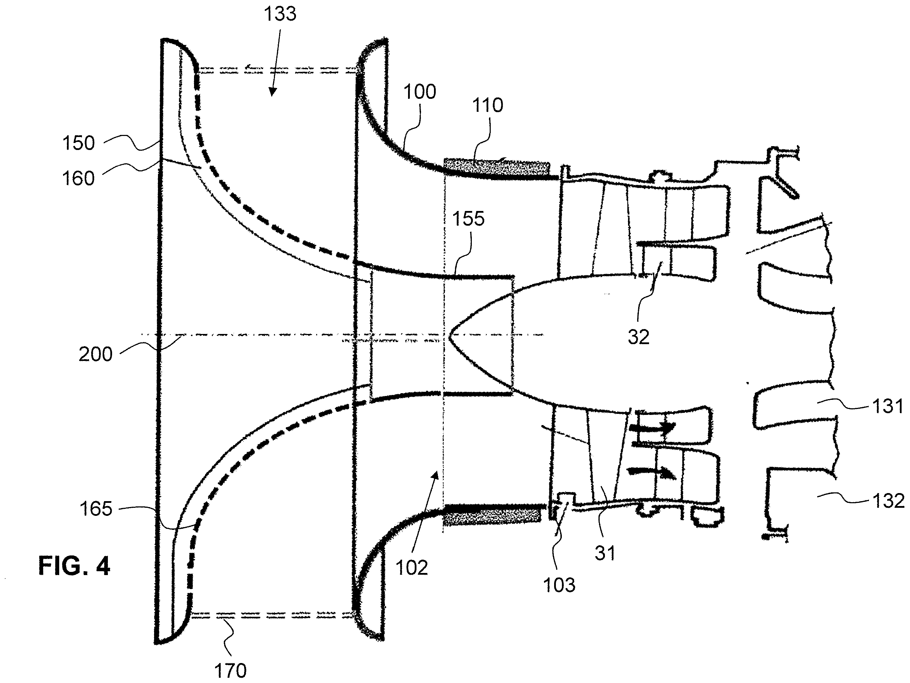

Fig. 4 zeigt eine schematische Seitenansicht im Querschnitt des Luftansaugbereiches eines düsenstrahlgetriebenen Sprühstrahlwerfers 10 gemäss einem Ausführungsbeispiel der Erfindung ähnlich zur Fig. 2. Hier ist das Einlaufsegment 100 mit einem Pilzeinlauf 150 ergänzt, der von vorne, mittig zur Triebwerksachse 200 auf und in das Einlaufsegment 100 eingesetzt wird. Der Pilzeinlauf 150 weist eine geschlossene Vorderwand auf, deren Durchmesser dem Durchmesser des Einlaufsegmentes 100 entspricht, so dass sich umlaufend in radialer Richtung ein Einlaufquerschnitt 133 ausbildet, der mit einer über den gesamten Umfang gleichen Höhe in Richtung 200 ausgestaltet ist. Mit anderen Worten, der ursprünglich in Triebwerksachsenrichtung 200 ausgerichtete Lufteinlauf über das Einlaufsegment 100 wie in Fig. 2 ist hier durch einen radialen Lufteinlauf ersetzt worden, der dann um 90 Grad zum Triebwerk hin umgelenkt wird. Der Einlaufquerschnitt 133 kann dabei durch ein Einlaufschutzgitter 170 abgedeckt sein. Der Durchmesser des Einlaufquerschnitts 133 verringert sich dabei von der Höhe des Einlaufschutzgitters 170 in Richtung 200 zum grösseren Durchmesser des Zylinderkonusbereichs 110 in radialer Richtung vom Triebwerk, welcher Durchmesser sich dann, wie beim Ausführungsbeispiel nach Fig. 2 etwas weiter zum Einlaufdurchmesser am Befestigungsflansch verringern kann.

Vorteilhafterweise sind die freien Wandenden am Schutzgitter 170 nach aussen aufgewölbt um eine nach aussen gekrümmte und sich nach innen verjüngende Aussenfläche zu bilden. In der Fig. 4 ist das Absorbermaterial 110 eingezeichnet. Die zugehörige Absorbermaterialaufnahme 111 liegt nun teilweise dem innenzylindrisch auslaufenden Ende 155 des Pilzeinlauf 150 gegenüber. Dieses Ende 155 ist vor der Turbinenspitze angeordnet und der gesamte Pilzeinlauf 150 ist über mit den Gittern 170 verbundenen Streben verbunden und wird durch diese in Position gehalten.

Der Einlaufquerschnitt 133 verkleinert sich von dem Durchmesser am Gitter 170 zum auslaufenden Ende 155 um 10 bis 35 Prozent. Dabei ist die von dem Pilzeinlauf 150 gebildete Absorberwand 165 eine durchbrochene gekrümmte Gitterfläche, wobei die Durchbrüche beispielsweise runde Löcher sind und die Stege von den dazwischen liegenden Rändern gebildet werden. Dies wird durch die strichlinierte Linie der Absorberabdeckung 165 dargestellt. Hinter dieser Absorberabdeckung 165 ist in einem kontinuierlich gleichen Abstand die Rückwand 166 der Absorberaufnahme vorgesehen, wobei diese Absorberaufnahme durch das Absorbermaterial 160 gefüllt ist.

Dabei kann es sich bei allen Absorbermaterialien 110, 210, 310 und 160 um gleiche oder verschiedene Absorber handeln.

Fig. 5 zeigt eine vergrösserte schematische Seitenansicht im Querschnitt einer Einlauftrompete des Luftansaugbereiches eines düsenstrahlgetriebenen Sprühstrahlwerfers 10 gemäss einem weiteren Ausführungsbeispiel der Erfindung ähnlich zur Fig. 4. Dabei ist hier der Teilabschnitt der Aussenwand des Einlaufsegmentes 100 gezeigt, der an dem Flansch 103 befestigt ist, also der Zylinderkonus. Dies ist auch an dem Zylinderkonuswinkel 201 zu sehen, der parallel zur Wand verläuft und einen kleinen Winkel von beispielsweise 1 bis 5 Grad umfasst und hier auf 3 Grad eingestellt ist. In die Aussenwand des Einlaufsegmentes 100 sind zwei in Umlaufrichtung abgesetzte Schultern 114 eingelassen, auf die die Absorbermaterialabdeckung 112 aufgesetzt ist. Diese Absorbermaterialabdeckung 112 ist eine Lochplatte mit runden Öffnungen oder Schlitze, vorzugsweise in Achsenrichtung 200, hinter der das Absorbermaterial 110 in der Absorbermaterialaufnahme 111 angeordnet ist. Die Loch- oder Schlitzgrösse der Absorbermaterialabdeckung 112 ist dabei so gewählt, dass das Absorbermaterial durch die vorbeistreichende angesaugte Luft nicht mitgerissen werden kann.

Das Einlaufsegment 100 und der Pilzeinlauf 150 sind vorzugsweise aus Stahlblech oder Kompositmaterialien gefertigt. Dies gilt ebenfalls für die Lochbleche der Absorbermaterialabdeckungen.

Die Fig. 6 zeigt eine sehr schematische Querschnittsansicht durch einen mittleren Bereich eines Strahltriebwerks entlang der Linie VI - VI der Fig. 3, wobei es sich um ein modifiziertes Beispiel der Fig. 3 handelt. Dabei ist mit dem Bezugszeichen 220 wiederum die Aussenwand des Strahltriebwerks 30 bezeichnet, welche sich im Querschnitt im Wesentlichen konzentrisch um die Triebwerksachse 200 anordnet. An der Aussenwand 220 des Strahltriebwerks 30 ist über eine Reihe von Befestigungsstreben 413 eine als U-Profil ausgestaltete Absorbermaterialaufnahme 410 befestigt, die nach oben in Pfeilrichtung 420 offen ist. Die Absorbermaterialaufnahme 410 umfasst damit U-förmig von unten die vollständige Bauhöhe des Strahltriebwerks 30; mindestens im mittleren und im Endbereich durch einen über 180 Grad angeordneten Kreisring, an den sich beidseitig Verlängerungen 415 anschliessen, die oberhalb der Bauhöhe des Triebwerks 30 an dem oberen Rand 416 enden.

Der Kreisring weist einen Innenwand 412 der Absorbermaterialaufnahme 410 auf, die in einem Abstand von der Aussenwand 220 des Triebwerks 30 geführt ist, um dazwischen einen Wärmeisolationskanal 414 zu bilden, wobei Wärme durch Konvektion nach oben abgeführt werden kann. Der Kreisringdurchmesser des Wärmeisolationskanal 414 ist hier konstant. Er kann sich insbesondere in Achsenrichtung 200 zu den beiden Enden des Triebwerks 30 verringern und die Innenwand 412 kann sich dann an die Aussenwand 220 des Triebwerks 30 annähern und mit dieser verbunden sein, ggf. mit Durchbrüchen für eine Luftzufuhr, um das Triebwerk 30 mit dem Absorbermaterial 410 nach unten und zu den Seiten hin über eine wesentliche Länge des Triebwerks 20 abzudecken.

Der Kreisring ist mit einem Winkel von 180 Grad gezeichnet, so dass die Verlängerung 415 parallel nach oben in Richtung 420 ausgerichtet sind. In anderen Ausführungen kann der Winkel auch grösser sein, so dass die Verlängerungen 415 aufeinander zu laufen und die obere Öffnung zur Schallabgabe verkleinern; oder der Winkel des Kreisrings kann auch kleiner als 180 Grad sein, so dass die Verlängerungen 415 auseinander laufen und die Absorbermaterialaufnahme 411 V-förmig ist. Das Absorbermaterial 410 ist im Kreisring-Bereich und in den Verlängerungen 415 vorgesehen. Der Winkel kann zwischen 160 und 200 Grad betragen

De Befestigungsstreben 413 sind schematisch dargestellt; wesentlich ist die vibrationsarme Befestigung der Absorbermaterialaufnahme 411. Es ist prinzipiell auch möglich, die Absorbermaterialaufnahme 411 und das Triebwerk 30 getrennt an der Lafette 14 zu befestigen.

Es ist ferner möglich, neben der Annäherung der Innenwand 412 des Kreisrings an die Wand 220 des Triebwerks 30 auch die beiden Verlängerungen 415 an den beiden Enden des Triebwerks 30 zusammenzuführen, damit nur ein nach oben 420 weisender Bereich um das Triebwerk 30 "offen" ist und sich somit Schall nur in diese Richtung ungedämpft ausbreiten kann.

**BEZUGSZEICHENLISTE**

| | | | |
|---|---|---|---|
| 10 | selbstfahrender | 155 | freies Ende |
| | Einsatzwagen | 160 | Absorber |
| 11 | Kettenlaufwerk | 165 | Absorberabdeckung |
| 12 | Wassertank | 170 | Einlaufschutzgitter |
| 13 | Treibstofftank | 200 | Triebwerkshauptachse |
| 14 | Lafette | 201 | Zylinderkonuswinkel |
| 20 | Sprühstrahlwerfer | 210 | Absorbermaterial |
| 30 | Strahltriebwerk | 211 | Absorbermaterialaufnahme |
| 31 | Schaufelblatt | 212 | Absorbermaterialabdeckung |
| 32 | Stator | 220 | Aussenwand des |
| 40 | Wasserwerfer | | Strahltriebwerks |
| 100 | Einlaufsegment | 230 | Nebenstromkanal |
| 101 | Einlauftubus | 310 | Absorbermaterial |
| 102 | Nahe-Zylinderabschnitt | 311 | Absorbermaterialaufnahme |
| 103 | Befestigungsflansch | 312 | Absorbermaterialabdeckung |
| 110 | Absorbermaterial | 410 | Absorbermaterial |
| 111 | Absorbermaterialaufnahme | 411 | Absorbermaterialaufnahme |
| 112 | Absorbermaterialabdeckung | 412 | Innenwand |
| 114 | abgesetzte Schulter | 413 | Befestigungsstrebe |
| 131 | Kernstrom | 414 | Wärmeisolationskanal |
| 132 | Mantelstrom | 415 | Verlängerung |
| 133 | Einlaufquerschnitt | 416 | oberer Rand |
| 150 | Pilzeinlauf | | |

## Patentansprüche

1. Düsenstrahlgetriebener Sprühstrahlwerfer (10) mit einem Strahltriebwerk (30), an dem mindestens ein Wasserwerfer (40) montiert ist, dessen Strahlrichtung im Wesentlichen derart in Richtung des Abgasstrahles des Strahltriebwerkes (30) ausgerichtet ist, dass das aus dem Wasserwerfer abgegebene Wasser als Sprühstrahl im Abgasstrahles des Strahltriebwerkes (30) mitgerissen wird, wobei auf der Lufteinlassseite des Strahltriebwerkes (30) ein Einlaufsegment (100) über den Querschnitt des Lufteinlasses befestigt (103) ist, und wobei das Einlaufsegment (100) im Bereich des Lufteinlasses eine im Wesentlichen Zylindermantelform aufweist, **dadurch gekennzeichnet, dass** ein in das Einlaufsegment (100) eingeschobener Pilzeinlauf (150) vorgesehen ist, mit dem ein Einlaufquerschnitt (133) für das Strahltriebwerk (30) gebildet wird, welcher von einer radialen Richtung bezüglich der Triebwerksachse (200) in Richtung der Triebwerksachse (200) umgelenkt ist, und dass auf der ausserhalb des Einlaufquerschnitts (133) liegenden Seite des Einlaufsegments eine mit Absorbermaterial (110) gefüllte erste Absorbermaterialaufnahme (111) vorgesehen ist, die durch eine Absorbermaterialabdeckung (112) vom Einlaufquerschnitt (133) getrennt ist.

2. Düsenstrahlgetriebener Sprühstrahlwerfer (10) nach Anspruch 1, **dadurch gekennzeichnet, dass** der gesamte Einlaufquerschnitt (133) von der radialen Umfangsfläche zur in Richtung der Triebwerksachse (200) ausgerichteter Ringfläche verkleinert ist.

3. Düsenstrahlgetriebener Sprühstrahlwerfer (10) nach einem der Ansprüche 1 oder 2, **dadurch gekennzeichnet, dass** eine mit Absorbermaterial (160) gefüllte dritte Absorbermaterialaufnahme an der zur Triebwerksachse (200) ausgerichteten Wand des Pilzeinlaufs (150) vorgesehen ist, die durch eine Absorbermaterialabdeckung (165) vom Einlaufquerschnitt (133) getrennt ist.

4. Düsenstrahlgetriebener Sprühstrahlwerfer (10) nach Anspruch 3, **dadurch gekennzeichnet, dass** die dritte Absorbermaterialaufnahme von der radial orientierten Mündung des Einlaufquerschnitts (133) bis zum quasi-hohlzylindrischen Mantel (155) des Pilzeinlaufs (150) angeordnet ist.

5. Düsenstrahlgetriebener Sprühstrahlwerfer (10) nach einem der Ansprüche 1 bis 4, **dadurch gekennzeichnet, dass** an der Mündung des Einlaufquerschnitts (133) zwischen Einlaufsegment (100) und Pilzeinlauf (150) ein umlaufendes Einlaufschutzgitter (170) vorgesehen ist.

6. Düsenstrahlgetriebener Sprühstrahlwerfer (10) nach einem der Ansprüche 1 bis 5, **dadurch gekennzeichnet, dass** die erste Absorbermaterialaufnahme (111) das Einlaufsegment (100) im Wesentlichen in Umlaufrichtung abdeckt.

7. Düsenstrahlgetriebener Sprühstrahlwerfer (10) nach einem der Ansprüche 1 bis 6, **dadurch gekennzeichnet, dass** mindestens eine mit Absorbermaterial (210; 310) gefüllte zweite Absorbermaterialaufnahme (211; 311) an der Aussenwand eines Mantelstromkanals (132) vorgesehen ist, die durch eine Absorbermaterialabdeckung (212; 312) vom Mantelstromkanal (132) getrennt ist.

8. Düsenstrahlgetriebener Sprühstrahlwerfer (10) nach einem der Ansprüche 1 bis 6, **dadurch gekennzeichnet, dass** eine mit Absorbermaterial (410) gefüllte weitere Absorbermaterialaufnahme (411) im Querschnitt als U-Profil nach oben (420) offen in einem unterhalb des Strahltriebwerks (30) einen Wärmeisolationskanal (414) bildenden Abstand gegenüber der Aussenwand vorgesehen ist.

9. Düsenstrahlgetriebener Sprühstrahlwerfer (10) nach Anspruch 8, **dadurch gekennzeichnet, dass** die Absorbermaterialaufnahme (411) im mittleren Bereich des Triebwerks (30) vorgesehen ist und sich in der Längsrichtung (200) die Weite des im Wesentlichen halbkreisförmigen Kreisrings des Wärmeisolationskanals (414) verringert, bis die Innenwand der Absorbermaterialaufnahme (411) mit der Aussenwand (220) des Triebwerks (30) zusammenläuft.

10. Düsenstrahlgetriebener Sprühstrahlwerfer (10) nach Anspruch 8 oder 9, **dadurch gekennzeichnet, dass** sich im Querschnitt an den gekrümmten Abschnitt des U-Profils der Absorbermaterialaufnahme (411) Verlängerungen (415) anschliessen, die eine nach oben (420) weisende Öffnung für den Wärmeisolationskanal (414) bilden.

11. Düsenstrahlgetriebener Sprühstrahlwerfer (10) nach einem der Ansprüche 1 bis 10, **dadurch gekennzeichnet, dass** jede Absorbermaterialabdeckung ein Loch- oder Schlitzblech (112; 165; 212, 312) ist, dass in die jeweilige Wand bündig eingelassen ist.

12. Düsenstrahlgetriebener Sprühstrahlwerfer (10) nach einem der Ansprüche 1 bis 11, **dadurch gekennzeichnet, dass** das Absorbermaterial ausgewählt ist aus der Gruppe bestehend aus porösem Absorber, mit Einsatz von Textilien, Mineralwolle und/oder Schaumstoff.

## Claims

1. Nozzle jet-driven spray jet launcher (10) with a jet engine (30), on which at least one water launcher (40) is mounted, the jet direction of which is orientated substantially in the direction of the exhaust gas jet of the jet engine (30) in such a way that the water discharged from the water launcher is entrained as a spray jet in the exhaust gas jet of the jet engine (30), wherein an inlet segment (100) is fixed (103) on the air inlet side of the jet engine (30) over the cross-section of the air inlet, and wherein the inlet segment (100) has a substantially cylindrical shell shape in the region of the air inlet, **characterized in that** a mushroom-shaped inlet (150) inserted into the inlet segment (100) is provided, with which an inlet cross-section (133) for the jet engine (30) is formed, which is deflected from a radial direction with respect to the engine axis (200) in the direction of the engine axis (200), and **in that** a first absorber material receptacle (111) filled with absorber material (110) is provided on the side of the inlet segment lying outside the inlet cross-section (133), which absorber material receptacle is separated from the inlet cross-section (133) by an absorber material cover (112).

2. Nozzle jet-driven spray jet launcher (10) according to claim 1, **characterized in that** the entire inlet cross-section (133) is reduced in size from the radial circumferential surface to the annular surface aligned in the direction of the engine axis (200).

3. Nozzle jet-driven spray jet launcher (10) according to one of claims 1 or 2, **characterized in that** a third absorber material receptacle filled with absorber material (160) is provided on the wall of the mushroom-shaped inlet (150) aligned with the engine axis (200), which is separated from the inlet cross-section (133) by an absorber material cover (165).

4. Nozzle jet-driven spray jet launcher (10) according to claim 3, **characterized in that** the third absorber material receptacle is arranged from the radially oriented mouth of the inlet cross-section (133) to the quasi hollow cylindrical casing (155) of the mushroom-shaped inlet (150).

5. Nozzle jet-driven spray jet launcher (10) according to one of claims 1 to 4, **characterized in that** a circumferential inlet protection grid (170) is provided at the mouth of the inlet cross-section (133) between the inlet segment (100) and the mushroom-shaped inlet (150).

6. Nozzle jet-driven spray jet launcher (10) according to one of claims 1 to 5, **characterized in that** the first absorber material holder (111) covers the inlet segment (100) substantially in the direction of rotation.

7. Nozzle jet-driven spray jet launcher (10) according to one of claims 1 to 6, **characterized in that** at least one second absorber material receptacle (211; 311) filled with absorber material (210; 310) is provided on the outer wall of a sheath flow channel (132), which is separated from the sheath flow channel (132) by an absorber material cover (212; 312).

8. Nozzle jet-driven spray jet launcher (10) according to one of claims 1 to 6, **characterized in that** a further absorber material receptacle (411) filled with absorber material (410) is provided in cross-section as a U-profile open upwards (420) at a distance from the outer wall forming a thermal insulation channel (414) below the jet engine (30).

9. Nozzle jet-driven spray jet launcher (10) according to claim 8, **characterized in that** the absorber material receptacle (411) is provided in the central region of the jet engine (30) and the width of the substantially semicircular annulus of the thermal insulation channel (414) decreases in the longitudinal direction (200) until the inner wall of the absorber material receptacle (411) converges with the outer wall (220) of the jet engine (30).

10. Nozzle jet-driven spray jet launcher (10) according to claim 8 or 9, **characterized in that** extensions (415) are connected in cross-section to the curved section of the U-profile of the absorber material holder (411), which extensions form an upwardly (420) pointing opening for the thermal insulation channel (414).

11. Nozzle jet-driven spray jet launcher (10) according to one of claims 1 to 10, **characterized in that** each absorber material cover is a perforated or slotted plate (112; 165; 212, 312) which is flush-mounted in the respective wall.

12. Nozzle jet-driven spray jet launcher (10) according to one of claims 1 to 11, **characterized in that** the absorber material is selected from the group consisting of porous absorber, with the use of textiles, mineral wool and/or foam.

## Revendications

1. Dispositif de lancement de jet de pulvérisation à entraînement à jet de buse (10), comprenant un turboréacteur (30) sur lequel est monté au moins un projecteur d'eau (40) dont la direction du jet est orientée essentiellement en direction du jet de gaz d'échappement du turboréacteur (30) de telle sorte que l'eau délivrée par le projecteur d'eau est entraînée sous forme de jet pulvérisé dans le jet de gaz d'échappement du turboréacteur (30), un segment d'entrée (100) étant fixé (103) sur la section transversale de l'entrée d'air du côté de l'entrée d'air du turboréacteur (30), et le segment d'entrée (100) présentant une forme d'enveloppe sensiblement cylindrique dans la zone de l'entrée d'air, **caractérisé en ce qu'**il est prévu une entrée en forme de champignon (150) insérée dans le segment d'entrée (100), avec laquelle est formée une section transversale d'entrée (133) pour le turboréacteur (30), qui est déviée d'une direction radiale par rapport à l'axe du turboréacteur (200) en direction de l'axe du turboréacteur (200), et **en ce que**, sur le côté du segment d'entrée situé à l'extérieur de la section transversale d'entrée (133), il est prévu un premier logement de matériau absorbant (111) rempli de matériau absorbant (110), qui est séparé de la section transversale d'entrée (133) par un couvercle de matériau absorbant (112).

2. Dispositif de lancement de jet de pulvérisation à entraînement à jet de buse (10) selon la revendication 1, **caractérisé en ce que** la section transversale d'entrée totale (133) est réduite de la surface circonférentielle radiale à la surface annulaire orientée dans la direction de l'axe du réacteur (200).

3. Dispositif de lancement de jet de pulvérisation à entraînement à jet de buse (10) selon l'une quelconque des revendications 1 ou 2, **caractérisé en ce qu'**un troisième logement de matériau absorbant rempli de matériau absorbant (160) est prévu sur la paroi de l'entrée en forme de champignon (150) orientée vers l'axe du réacteur (200), lequel est séparé de la section transversale d'entrée (133) par un couvercle de matériau absorbant (165).

4. Dispositif de lancement de jet de pulvérisation à entraînement à jet de buse (10) selon la revendication 3, **caractérisé en ce que** le troisième logement de matériau absorbant est disposé de l'embouchure orientée radialement de la section transversale d'entrée (133) jusqu'à l'enveloppe cylindrique quasi-creuse (155) de l'entrée en forme de champignon (150).

5. Dispositif de lancement de jet de pulvérisation à entraînement à jet de buse (10) selon l'une quelconque des revendications 1 à 4, **caractérisé en ce qu'**une grille de protection d'entrée (170) périphérique est prévue à l'embouchure de la section transversale d'entrée (133) entre le segment d'entrée (100) et l'entrée en forme de champignon (150).

6. Dispositif de lancement de jet de pulvérisation à entraînement à jet de buse (10) selon l'une quelconque des revendications 1 à 5, **caractérisé en ce que** le premier logement de matériau absorbant (111) recouvre le segment d'entrée (100) essentiellement dans le sens de la circulation.

7. Dispositif de lancement de jet de pulvérisation à entraînement à jet de buse (10) selon l'une quelconque des revendications 1 à 6, **caractérisé en ce qu'**au moins un deuxième logement de matériau absorbant (211 ; 311) rempli de matériau absorbant (210 ; 310) est prévu sur la paroi extérieure d'un canal de flux d'enveloppe (132), qui est séparé du canal de flux d'enveloppe (132) par un couvercle de matériau absorbant (212 ; 312).

8. Dispositif de lancement de jet de pulvérisation à entraînement à jet de buse (10) selon l'une quelconque des revendications des revendications 1 à 6, **caractérisé en ce qu'**un autre logement de matériau absorbant (411) rempli de matériau absorbant (410) est prévu en section transversale sous la forme d'un profilé en U ouvert vers le haut (420) à une distance de la paroi extérieure formant un canal d'isolation thermique (414) en dessous du turboréacteur (30).

9. Dispositif de lancement de jet de pulvérisation à entraînement à jet de buse (10) selon la revendication 8, **caractérisé en ce que** le logement de matériau absorbant (411) est prévu dans la zone centrale du turboréacteur (30) et **en ce que**, dans la direction longitudinale (200), la largeur de l'anneau circulaire sensiblement semi-circulaire du canal d'isolation thermique (414) diminue jusqu'à ce que la paroi intérieure du logement de matériau absorbant (411) converge avec la paroi extérieure (220) du turboréacteur (30).

10. Dispositif de lancement de jet de pulvérisation à entraînement à jet de buse (10) selon la revendication 8 ou 9, **caractérisé en ce que** des prolongements (415) se raccordent en section transversale à la partie incurvée du profil en U du logement de matériau absorbant (411), lesquels forment une ouverture orientée vers le haut (420) pour le canal d'isolation thermique (414).

11. Dispositif de lancement de jet de pulvérisation à entraînement à jet de buse (10) selon l'une quelconque des revendications 1 à 10, **caractérisé en ce que** chaque couvercle de matériau absorbant est une tôle perforée ou fendue (112 ; 165 ; 212, 312) qui est encastrée de manière affleurante dans la paroi correspondante.

12. Dispositif de lancement de jet de pulvérisation à entraînement à jet de buse (10) selon l'une quelconque des revendications 1 à 11, **caractérisé en ce que** le matériau absorbant est choisi dans le groupe constitué par un absorbant poreux, avec utilisation de textiles, de laine minérale et/ou de mousse.
